# EUROPEAN PATENT APPLICATION

(11) **EP 4 826 966 A1**
(43) Date of publication of application: **21.10.2026**
(21) Application number: 24903599.9
(22) Date of filing: 05.12.2024
(51) Int. Cl.: H02K 3/38, H02K 3/46

(54) **STATOR AND MOTOR**

(30) Priority: 12.12.2023 JP 2023209468
(71) Applicant: DENSO CORPORATION, Kariya-city, Aichi 448-8661 (JP)
(72) Inventor: MARUYAMA, Tetsuya, Kariya-city, Aichi 448-8661 (JP); USAMI, Hiroaki, Kariya-city, Aichi 448-8661 (JP)
(74) Representative: Kuhnen & Wacker Patent- und Rechtsanwaltsbüro PartG mbB
(86) International application number: PCT/JP2024/043030
(87) International publication number: WO 2025/126942

(57) **Abstract**

A stator (3) includes a stator core (6) in which a rotor (4) is rotatably housed, coils (2) arranged in a circumferential direction of the stator core (6), and a stator molded portion (7) that seals at least a portion of the coils (2) with resin. At least one of the coils (2) has a wiring portion (19) that is drawn out from the stator core (6) and routed in the circumferential direction of the stator core (6) to be connected to an external terminal (5), and the insulating tubular body (23) that accommodates the conductor wire 17 inside the wiring portion (19). The stator molded portion seals at least the wiring portion. The tubular body includes a first tubular body (24), one end of which is exposed from the stator molded portion and the other end of which is embedded in the stator molded portion, and a second tubular body (25), which is arranged inside the stator molded portion so as to be separated from the first tubular body.

## Description

### CROSS REFERENCE TO RELATED APPLICATION

This application is based on Japanese Patent Application No. 2023-209468 filed on December 12, 2023, the contents of which are incorporated herein by reference.

### TECHNICAL FIELD

The present disclosure relates to a stator and a motor.

### BACKGROUND

Conventionally, as disclosed in Patent Literature 1, an armature (stator) of a rotary electric machine that rotates by three-phase AC power is well known. In the armature disclosed in Patent Literature 1, in order to connect ends of each coil that are in phase and provided on the armature, the ends of the coils are routed around a stator core in a circumferential direction.

### PRIOR ART LITERATURE

### PATENT LITERATURE

Patent Literature 1: JP 2019-134578 A

### SUMMARY OF THE INVENTION

For example, it is conceivable to protect routed portions of the coil by molding them, including the coil ends, with resin. However, in this case, there is a possibility that the coil may be damaged by a resin molding die. As a countermeasure, for example, it is possible to address this by attaching a tube to a wire of the coil. However, when this countermeasure is employed, there is concern that fluid may infiltrate through a gap between the coil wire and the tube.

An object of the present disclosure is to provide a stator and a motor capable of both reducing coil damage and ensuring waterproof property.

In a first aspect of the present disclosure, a stator includes a stator core that rotatably accommodates a rotor. The stator includes coils arranged in a circumferential direction of the stator core. The stator includes a stator molded portion that seals at least a part of the coils with resin. At least one of the coils includes a wiring portion drawn out from the stator core. The wiring portion is routed in the circumferential direction of the stator core. The wiring portion is connected to an external terminal. The at least one of the coils includes an insulating tubular body provided at the wiring portion. The insulating tubular body accommodates a core wire in the tubular body. The stator molded portion seals at least the wiring portion. The tubular body includes a first tubular body having one end exposed from the stator molded portion. The first tubular body has another end embedded in the stator molded portion. The tubular body includes a second tubular body disposed within the stator molded portion. The second tubular body is spaced apart from the first tubular body.

In a second aspect of the present disclosure, a motor includes a stator and a rotor. The rotor is rotatably accommodated within the stator. The stator includes a stator core that rotatably accommodates the rotor. The stator includes coils arranged in a circumferential direction of the stator core. The stator includes a stator molded portion that seals at least a part of the coils with resin. At least one of the coils includes a wiring portion drawn out from the stator core. The wiring portion is routed in the circumferential direction of the stator core. The wiring portion is connected to an external terminal. The at least one of the coils includes an insulating tubular body provided at the wiring portion. The insulating tubular body accommodates a core wire in the tubular body. The stator molded portion seals at least the wiring portion. The tubular body includes a first tubular body having one end exposed from the stator molded portion. The first tubular body has another end embedded in the stator molded portion. The tubular body includes a second tubular body disposed within the stator molded portion. The second tubular body is spaced apart from the first tubular body.

According to this configuration, when the stator molded portion is manufactured on the stator using a mold, the tubular body serves as a buffer material against the molding die, making it difficult for the conductor wire of the coil to be damaged. Therefore, it becomes possible to reduce the likelihood of the coil being damaged by the molding die. Furthermore, the tubular body is divided into the first tubular body and the second tubular body, and the second tubular body is arranged separated from the first tubular body. Therefore, even if fluid enters through the gap between the conductor wire and the first tubular body, the infiltration of fluid into the stator can be reduced by blocking the fluid from entering between the stator molded portion and the conductor wire, which are in close contact with each other. Accordingly, it is possible to achieve both suppression of damage to the coil and assurance of waterproofing.

### BRIEF DESCRIPTION OF DRAWINGS

The above and other objects, features and advantages of the present disclosure will become more apparent from the following detailed description made with reference to the accompanying drawings.
FIG. 1 is a perspective view of a stator according to a first embodiment.
FIG. 2 is a schematic diagram showing a coil winding structure of the stator.
FIG. 3 is a configuration diagram of a busbar module.
FIG. 4 is a cross-sectional view showing a coil arrangement structure of the stator.
FIG. 5 is a perspective view of a stator having a stator molded portion.
FIG. 6 is an enlarged perspective view of a part of the stator.
FIG. 7 is a schematic diagram showing an arrangement structure of a first tubular body and a second tubular body.
FIG. 8 is a schematic diagram showing an arrangement structure of the first tubular body and the second tubular body according to another example.

### DETAILED DESCRIPTION

Hereinafter, a first embodiment of the present disclosure will be described.

### [Motor 1]

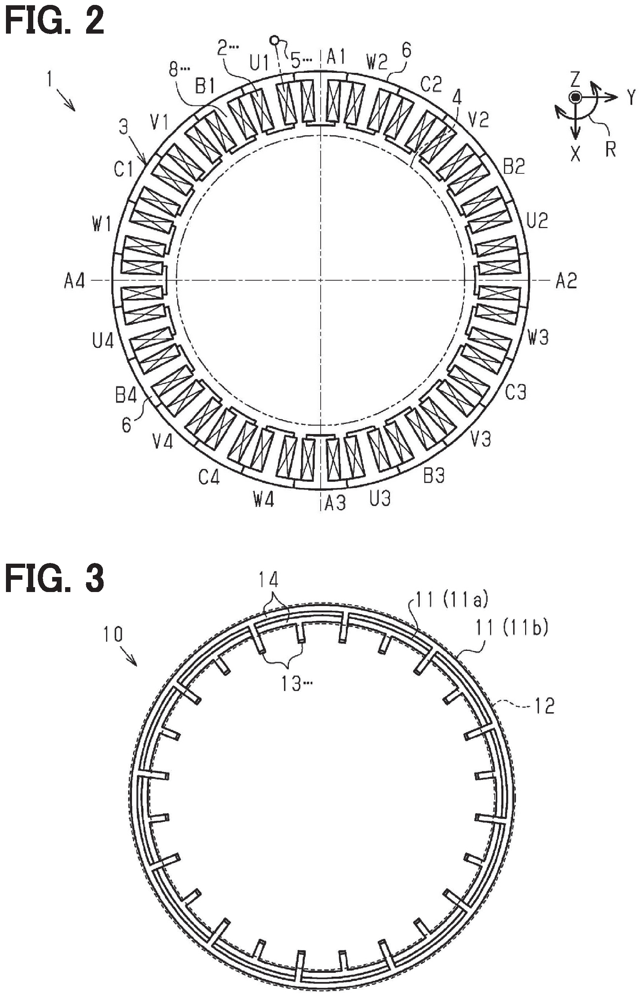

As shown in FIG. 2, a motor 1 includes a stator 3 having coils 2 formed by winding wire material in a circumferential direction (a direction of arrow R shown in FIG. 2), and a rotor 4 rotatably accommodated inside the stator 3. In the first embodiment, the motor 1 is an inner rotor type, in which the rotor 4 is positioned inside the stator 3. The motor 1 is a brushless motor in which the rotor 4 is rotated by supplying a three-phase alternating current to the coil 2 through on/off control of switching elements (not shown).

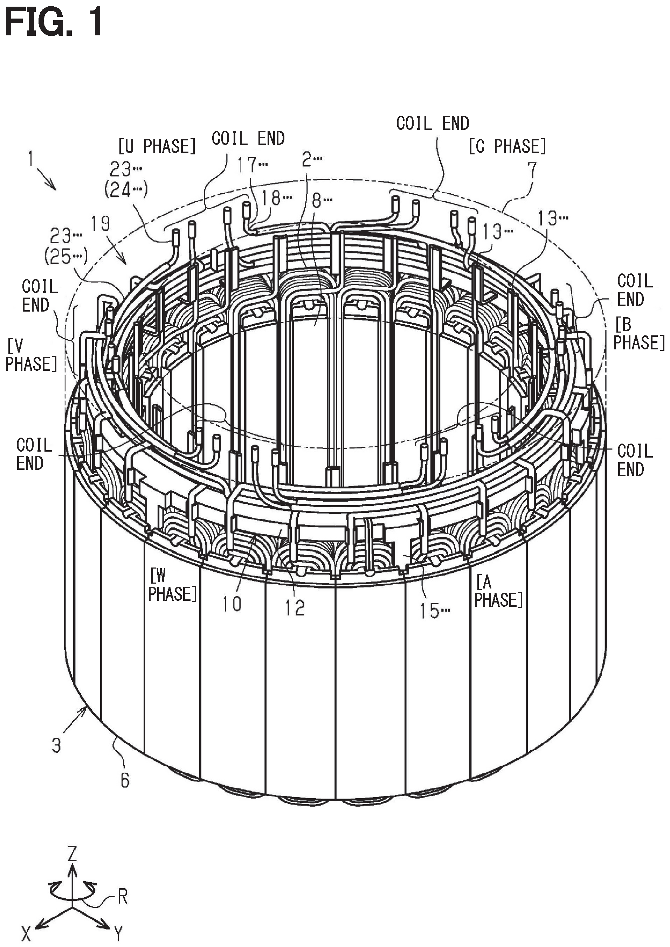

As shown in FIG. 1, the motor 1 is a multi-system motor (multi-phase motor) having three-phase AC electrical circuits (in this example, two systems). The motor 1 includes a first system having a U-phase, a V-phase, and a W-phase, and a second system having an A-phase, a B-phase, and a C-phase. Further, the motor 1 is a multiple-inverter drive type, in which each system is driven by a respective, different inverter (not shown).

Each phase of the motor 1 has, for example, four coils 2. Coil ends of each coil 2 are arranged collectively for each corresponding phase. For example, starting from a group of coil ends of the U-phase and proceeding counterclockwise on the drawing, groups of coil ends of the V-phase, the W-phase, the A-phase, the B-phase, and the C-phase are arranged sequentially. Therefore, when the stator 3 is divided into two at a center as viewed from an axial direction (Z-axis direction in FIG. 1), the coil end groups of the U to W-phases are arranged in one region (the left side), and the coil end groups of the A to C-phases are arranged in the other region (the right side).

As shown in FIG. 2, the coils 2 of each phase are arranged, for example, in the circumferential direction of the stator 3 in the order of the A-phase, the U-phase, the B-phase, the V-phase, the C-phase, and the W-phase, sequentially in the counterclockwise direction on the drawing. In this manner, the coils 2 are arranged in a coil sequence in which the coils for the first system and the coils for the second system are alternately arranged in the circumferential direction of the stator core 6. Four coils 2 are formed for each of the U to W-phases and A to C-phases (U1 to U4, V1 to V4, W1 to W4, A1 to A4, B1 to B4, and C1 to C4). Therefore, the arrangement of the coils 2 of the A-phase, the U-phase, the B-phase, the V-phase, the C-phase, and the W-phase is repeated four times in the circumferential direction of the stator 3.

The coils 2 of the same phase are arranged at intervals of 90 degrees in the circumferential direction of the stator 3. An angle formed between the coil group of the first system (the U-phase, the V-phase, the W-phase) and the coil group of the second system (the A-phase, the B-phase, the C-phase) is set to 15 degrees in the circumferential direction of the stator 3. Each coil 2 of the U to W-phases is arranged such that an angle between the closest coils is set to 30 degrees. Each coil 2 of the A to C-phases is arranged such that an angle between the closest coils is set to 30 degrees. The coil ends of each coil 2 are connected to an inverter or the like via external terminals 5.

In a case where the motor 1 is a multi-system motor driven by multiple inverters, it is driven by inverters, allowing for high motor output to be obtained. Further, in a case where the three-phase AC circuit of the motor 1 consists of two systems (a system of U to W-phases and a system of A to C-phases), for example, even if an abnormality occurs in one system, motor control can be continued by the other system, thereby preventing a loss of control. Therefore, this contributes to improved redundancy in motor control.

### [Stator 3]

As shown in FIG. 1, the stator 3 includes, in addition to the coil 2, a stator core 6 and a stator molded portion 7. The rotor 4 is rotatably housed inside the stator core 6. Inside the stator core 6, teeth 8 for winding the coil 2 are arranged at equal intervals in the circumferential direction. The stator 3 is a 24-slot type with the number of coils 2 being "24."

### [Busbar Module 10]

As shown in FIGS. 1 and 3, the stator 3 is provided with a busbar module 10 that connects neutral points of each coil 2 of the three-phase alternating current. As shown in FIG. 3, the busbar module 10 includes a busbar 11 to which the other ends of the coils 2, whose one ends are connected to the external terminal 5, are connected, and a busbar mold portion 12 that seals the busbar 11. The busbar module 10 is disposed at an end portion of the stator core 6 in the axial direction (the Z-axis direction in FIG. 1). The busbar module 10 has a shape along the circumferential direction of the stator core 6, specifically, it is formed in a tubular shape.

### [Busbar Mold Portion 12]

As shown in FIGS. 1 and 3, the busbar mold portion 12 seals, for example, portions of the busbar 11 other than coil connecting portions 13 with resin. That is, the busbar mold portion 12 is made of resin and resin-seals a busbar main body 14 of the busbar 11. The busbar mold portion 12 is formed, for example, in an annular shape (in this example, a circular ring shape) along an axial end of the stator 3. As shown in FIG. 1, leg portions 15, which are arranged on an upper surface of the stator core 6, are formed on a rear surface of the busbar mold portion 12 at predetermined intervals in the circumferential direction.

### [Busbar 11]

As shown in FIG. 3, the busbar 11 is formed, for example, in a shape that follows at least a part of the circumferential direction at an axial end edge of the stator core 6 in the axial direction. More specifically, the busbar 11 (busbar main body 14) is formed in an annular shape (in this example, a circular ring shape) along the circumferential direction of the stator core 6.

The busbar 11 includes a first busbar 11a for the first system and a second busbar 11b for the second system. That is, one of the first busbar 11a and the second busbar 11b is the busbar 11 for the U to V-phases, and the other is the busbar 11 for the A to C-phases. In this manner, the busbar module 10 includes the busbar 11 for each system. A diameter of the first busbar 11a is formed smaller than a diameter of the second busbar 11b.

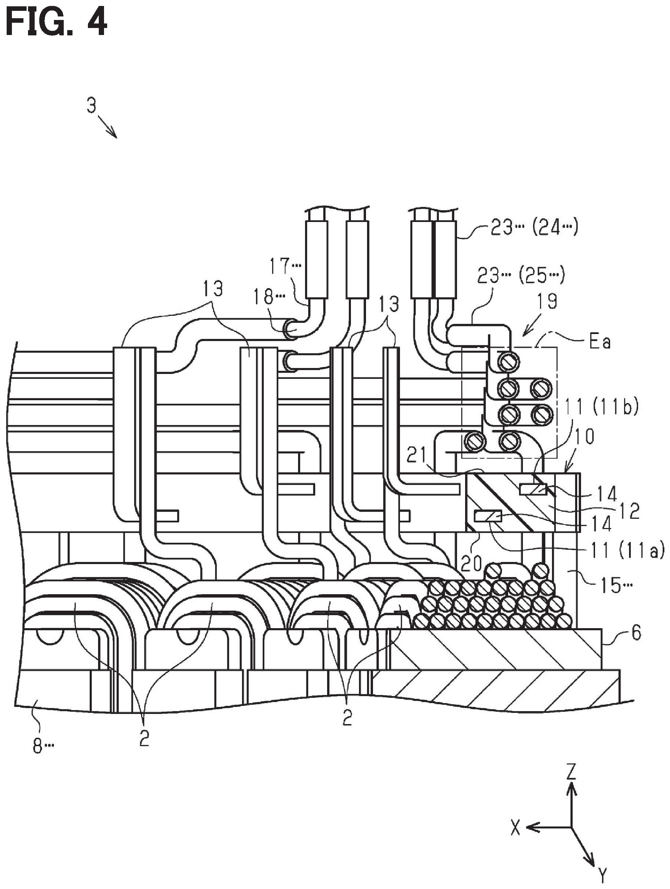

As shown in FIG. 4, the coil connecting portion 13 is integrally formed with the busbar main body 14 and is exposed outside the busbar mold portion 12. The coil connecting portion 13 is formed, for example, in a substantially L-shape, with its tip extending toward the axially outward side (+Z-axis direction in FIG. 4) of the stator core 6. The coil connecting portion 13 is disposed on an inner side of the annular busbar 11 in the radial direction. The other end of the coil 2 is fixed to a side portion of the coil connecting portion 13.

### [Coil 2]

As shown in FIG. 1, the coils 2 are arranged in the circumferential direction of the stator core 6. The coil 2 has a conductor wire 17 wound around the teeth 8 of the stator core 6. The conductor wire 17 is, for example, an enameled wire. The conductor wire 17 has an insulating coating 18 baked on its surface. Examples of the insulating coating 18 include PI (polyimide), PPS (polyphenylene sulfide), PEEK (polyether ether ketone), and PAI (polyamide-imide).

### [Wiring Portion 19]

As shown in FIG. 1, at least one of the coils 2 is provided with a wiring portion 19 that is drawn out from the stator core 6, routed at the axial end of the stator core 6, and connected to the external terminal 5. The wiring portion 19 forms a wiring group, for example, by routing the coil ends of each coil 2 for the U-phase, the V-phase, the W-phase, the A-phase, the B-phase, and the C-phase at the axial end of the stator core 6. That is, the wiring portion 19 forms a coil bundle arranged at the axial end of the stator core 6.

As shown in FIG. 4, the wiring portion 19 is formed by routing the coil 2 in the circumferential direction of the stator core 6. In particular, the wiring portion 19 is disposed radially outward of the coil connecting portion 13 of the busbar 11 and is connected to the external terminal 5. More specifically, the wiring portion 19 is disposed in a region Ea that is open toward the radially outward direction on the surface of the busbar module 10. The wiring portion 19 is routed on the radially outer side of the stator core 6 relative to the coil connecting portion 13 and is connected to the external terminal 5.

The wiring portion 19 is arranged, for example, at a position overlapping the busbar molded portion 12 in a thickness direction (Z-axis direction in FIG. 4) of the busbar module 10. More specifically, the wiring portion 19 is disposed on the surface of the busbar molded portion 12 in the thickness direction (the surface on the +Z-axis side in FIG. 4). Therefore, the busbar molded portion 12 supports the wiring portion 19 on the surface 21 opposite to the surface 20 that faces the coil end. The surface 20 facing the coil end is a rear surface of the busbar molded portion 12. The surface 21 opposite to the surface 20 facing the coil end is a front surface of the busbar molded portion 12.

### [Stator Molded Portion 7]

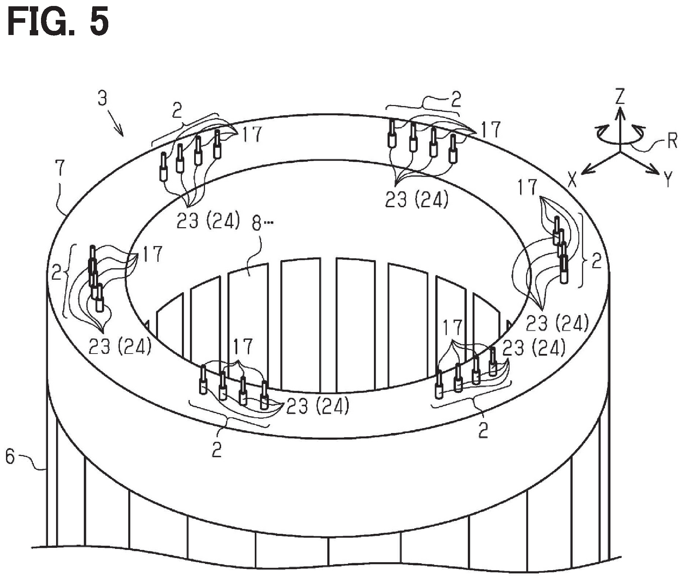

As shown in FIGS. 1 and 5, the stator molded portion 7 seals at least the wiring portion 19 with resin at the axial end of the stator core 6. The stator molded portion 7 seals at least the busbar module 10 (busbar 11) and the wiring portion 19. In this manner, the stator 3 is partially sealed by the resin-made stator molded portion 7. It should be noted that the stator molded portion 7 may also be formed in gaps between adjacent teeth 8. As material for the stator molded portion 7, for example, epoxy resin is used.

### [Tubular Body 23]

As shown in FIGS. 1, 4, and 6, at least one of the coils 2 has, in the wiring portion 19, an insulating tubular body 23 that accommodates the conductor wire 17 of the coil 2 therein. The tubular body 23 is provided, for example, to protect the coil 2 (conductor wire 17) from noise. The tubular body 23 has a first tubular body 24 and a second tubular body 25. The first tubular body 24 has, for example, one end exposed from the stator molded portion 7 and the other end embedded in the stator molded portion 7. The second tubular body 25 is disposed, for example, inside the stator molded portion 7, separated from the first tubular body 24.

The tubular body 23 is, for example, a heat-shrinkable tube. The material of the heat-shrinkable tube is, for example, a fluororesin (fluoropolymer). Examples of fluororesins include FEP (fluorinated ethylene propylene) and fluororubber. In addition to fluororesins, materials for the heat-shrinkable tube may also include, for example, polyolefin, polyvinyl chloride, polytetrafluoroethylene, polyvinylidene fluoride, silicone, elastomers, and the like.

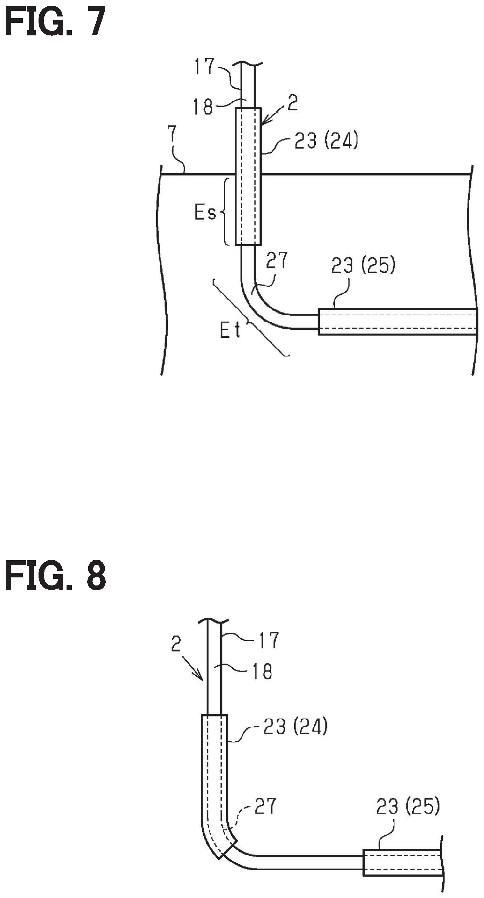

As shown in FIG. 7, at least one of the coils 2 has a bent portion 27 formed by bending in the wiring portion 19. The bent portion 27 is a portion where the coil 2 (the conductor wire 17) is bent approximately 90 degrees. The first tubular body 24 is arranged so as not to cross the bent portion 27. That is, the first tubular body 24 is arranged so that its base end embedded in the stator molded portion 7 does not reach the bent portion 27 of the conductor wire 17.

### [Actions of First Embodiment]

Next, the actions of the stator 3 (motor 1) of the first embodiment will be described.

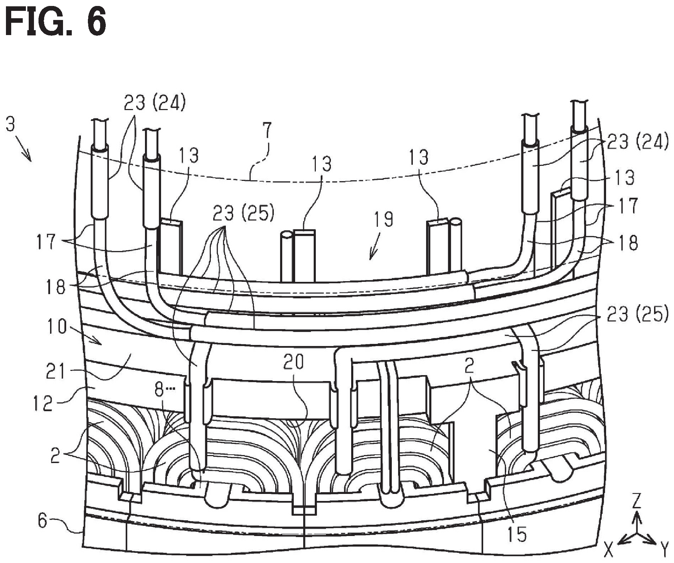

As shown in FIG. 6, the wiring portion 19 of the coil 2, which is resin-sealed by the stator molded portion 7, is provided with the tubular body 23 (the first tubular body 24 and the second tubular body 25) that covers a periphery of the conductor wire 17. Therefore, when the stator molded portion 7 is resin-molded onto the stator 3, the coil 2 is covered by the tubular body 23, which has a high modulus of elasticity, making it possible to protect the coil 2 (the conductor wire 17) from a molding die. Accordingly, during the resin molding of the stator molded portion 7, it is possible to prevent damage to the coil 2 (the conductor wire 17) caused by the molding die.

Incidentally, in the coil 2, since the conductor wire 17 and the tubular body 23 are not in a tightly adhered state, there is a possibility that fluid (for example, water) may infiltrate through a gap between them. Since the infiltrated fluid may reach the interior of the stator 3 and cause deterioration of the components of the stator 3, some form of countermeasure is necessary.

In the first embodiment, as shown in FIG. 7, the tubular body 23 is divided into the first tubular body 24 and the second tubular body 25, and by arranging the second tubular body 25 at a position separated from the first tubular body 24, a portion of the wiring portion 19 where the tubular body 23 is omitted (omitted section Et) is formed. Incidentally, in the omitted section Et of the tubular body 23, the metal wire such as an enameled wire comes into direct contact with the resin, resulting in strong adhesion to the stator molded portion 7. That is, the adhesive strength between the stator molded portion 7 and the conductor wire 17 is higher than the adhesive strength between the stator molded portion 7 and the tubular body 23.

Therefore, in the coil 2, the wiring portion 19 adheres more strongly to the stator molded portion 7 at the omitted section Et than at a covered portion Es, where the conductor wire 17 is covered by the first tubular body 24. Therefore, even if fluid enters between the conductor wire 17 and the first tubular body 24, it becomes more difficult for the fluid to further penetrate into the interior from the omitted section Et. Even if fluid enters between the stator molded portion 7 and the first tubular body 24, the penetration of this fluid is also blocked at the omitted section Et. Therefore, it becomes possible to prevent fluid from entering the interior of the stator 3. As described above, it is possible to achieve both suppression of damage to the coil 2 and high waterproof performance of the stator 3.

### [Effects of Embodiment]

According to the configuration of the above embodiment, the following effects can be obtained.

The stator 3 includes the stator core 6 in which the rotor 4 is rotatably housed, the coils 2 arranged in the circumferential direction of the stator core 6, and the stator molded portion 7 that seals at least a portion of the coils 2 with resin. At least one of the coils 2 has the wiring portion 19 that is drawn out from the stator core 6 and routed in the circumferential direction of the stator core 6 to be connected to the external terminal 5, and the insulating tubular body 23 that accommodates the conductor wire 17 inside the wiring portion 19. The stator molded portion 7 seals at least the wiring portion 19. The tubular body 23 includes the first tubular body 24, one end of which is exposed from the stator molded portion 7 and the other end of which is embedded in the stator molded portion 7, and the second tubular body 25, which is arranged inside the stator molded portion 7 so as to be separated from the first tubular body 24.

According to this configuration, when the stator molded portion 7 is manufactured on the stator 3 using a mold, the tubular body 23 serves as a buffer material against the molding die, making it difficult for the conductor wire 17 of the coil 2 to be damaged. Therefore, it becomes possible to reduce the likelihood of the coil 2 being damaged by the molding die. Furthermore, the tubular body 23 is divided into the first tubular body 24 and the second tubular body 25, and the second tubular body 25 is arranged separated from the first tubular body 24. Therefore, even if fluid enters through the gap between the conductor wire 17 and the first tubular body 24, the infiltration of fluid into the stator 3 can be reduced by blocking the fluid from entering between the stator molded portion 7 and the conductor wire 17, which are in close contact with each other. Accordingly, it is possible to achieve both suppression of damage to the coil 2 and assurance of waterproofing.

The tubular body 23 is a heat-shrinkable tube. According to this configuration, it is possible to tightly adhere the tubular body 23, which is a heat-shrinkable tube, to the conductor wire 17 by heat shrinking. Therefore, it becomes possible to make it difficult for gaps to form between the conductor wire 17 and the tubular body 23, further contributing to the suppression of fluid ingress.

The conductor wire 17 has an insulating coating 18 baked on its surface. The material of the heat-shrinkable tube (the tubular body 23) is a fluororesin. Epoxy resin is used as the material for the stator molded portion 7. According to this configuration, the adhesive strength between the epoxy resin during resin molding and the conductor wire 17 (insulating coating) is higher than the adhesive strength between the epoxy resin during resin molding and the fluororesin. Therefore, the stator molded portion 7 and the conductor wire 17 can be brought into sufficiently strong and close contact, which further contributes to suppressing the intrusion of fluid into the interior of the stator 3.

The stator 3 has the busbar module 10 in which the busbar main body 14 of the busbar 11, which is arranged between the coil ends of the coils 2 and the wiring portion 19 and is connected to the coils 2, is sealed with resin. The stator molded portion 7 seals at least the busbar module 10 and the wiring portion 19. According to this configuration, since the coils 2 of the wiring portion 19 and the busbar module 10 are fixed by the stator molded portion 7, it is possible to make these components less susceptible to positional displacement.

At least one of the coils 2 has a bent portion 27 formed by being bent in the wiring portion 19. The first tubular body 24 is arranged so as not to cross the bent portion 27. According to this configuration, since the first tubular body 24 is arranged linearly along the conductor wire 17, it is difficult for gaps to occur in the middle of the first tubular body 24. Therefore, this further contributes to suppressing the infiltration of fluid into the interior of the stator 3.

### [Other Embodiments]

The above-described embodiments may be modified as follows. The above described embodiments and the following modifications can be implemented in combination with one another as long as there is no technical contradiction.

As shown in FIG. 8, for example, the first tubular body 24 may be arranged so as to cross at least a part of the bent portion 27. According to this configuration, it becomes possible to hook the first tubular body 24 onto the bent portion 27, thereby making it more difficult for the first tubular body 24 to come off.

The first tubular body 24 and the second tubular body 25 may be formed from different materials. The second tubular body 25 may be one of second tubular bodies. The portion where the tubular body 23 is omitted may be provided at any position of the coil 2.

The bent portion 27 is not limited to a shape bent at 90 degrees. It may also have a bent shape of less than 90 degrees or more than 90 degrees. Bent portions 27 may be formed in a single coil 2.

The bent portion 27 may be omitted. The wiring portion 19 is not limited to being arranged on the upper surface 21 of the busbar module 10. As long as it follows the route along the busbar 11, it may, for example, be arranged on the side surface or the rear surface of the busbar module 10.

The coil connection portions 13 of the busbar 11 are not limited to being equal in number to the coils 2. They may be fewer than the number of coils 2. In this case, a common coil connecting portion 13 is shared by the coils 2.

The busbar 11 (the busbar module 10) is not limited to an annular shape or tubular shape. It may be a portion of an annular shape, specifically an arc shape. The busbar 11 (the busbar main body 14) is not limited to an annular shape. For example, it may be a busbar piece in which a single coil connecting portion 13 extends from a small, square-shaped metal piece. In this case, the busbar 11 may be configured to have only one such busbar piece.

The busbar 11 is not limited to being disposed at the axial end of the stator core 6. For example, it may be arranged at another location, such as on the outer surface of the stator core 6. In this case, the wiring portion 19 is not limited to being disposed along the busbar 11. For example, it may be arranged at the axial end of the stator core 6.

The coil 2 is not limited to concentrated winding and may also be a distributed winding. The combination of the coil 2 and the busbar 11 is not limited to the systems, and may be a single system (one system).

The stator molded portion 7 only needs to seal at least the wiring portion 19, and may, for example, have a shape that does not seal the busbar module 10 or the gaps between the teeth 8. The number of slots in the stator 3 is not limited to "24" and may be changed to another number, such as "12," for example.

The number of poles of the rotor 4 may be appropriately set to the required number of poles. The motor 1 and the stator 3 are preferably intended to be mounted, for example, in an air mobility vehicle. The intended installation is not limited to air mobility vehicles and may also be applied to vehicles such as passenger cars.

The motor 1 and the stator 3 are not limited to being mounted in mobility vehicles, but may also be installed in various devices and apparatuses that require a rotary drive source. The expression "at least one" as used in the present disclosure means "one or more" of the desired options. As one example, the expression "at least one" as used in the present disclosure means, when there are two options, either "only one of the options" or "both of the two options." As another example, the expression "at least one" as used in the present disclosure means, when there are three or more options, either "only one of the options" or "any combination of two or more options."

Although the present disclosure has been described in accordance with the embodiments, it is understood that the present disclosure is not limited to the embodiments and structures disclosed therein. The present disclosure encompasses various modifications and variations within the scope of equivalents. In addition, various combinations and forms-including those comprising only one element, more than one, or fewer than one element-are also within the scope and spirit of the present disclosure.

Next, the technical features that can be understood from the above embodiments and modified examples will be described.
[1] A stator comprising:
   a stator core (6) rotatably accommodating a rotor (4);
   coils (2) arranged in a circumferential direction of the stator core (6); and
   a stator molded portion (7) sealing at least a part of the coils (2) with resin, wherein
   at least one of the coils includes:
      a wiring portion (19) drawn out from the stator core, routed in the circumferential direction of the stator core, and connected to an external terminal (5); and
      an insulating tubular body (23) provided at the wiring portion (19) and accommodating a core wire (17) in the tubular body (23),
   the stator molded portion seals at least the wiring portion,
   the tubular body includes:
      a first tubular body (24) having one end exposed from the stator molded portion and another end embedded in the stator molded portion; and
      a second tubular body (25) disposed within the stator molded portion and spaced apart from the first tubular body (24).
[2] The stator according to [1], wherein
   the tubular body is a heat-shrinkable tube.
[3] The stator according to [2], wherein
   the core wire has an insulating coating (18) baked on a surface of the core wire,
   the heat-shrinkable tube is made of a fluoropolymer, and
   the stator molded portion is made of an epoxy resin.
[4] The stator according to any on of [1] to [3], further comprising:
   a busbar module (10) including a busbar body (14) of a busbar (11) connected to the coils, the busbar body being disposed between coil ends of the coils and the wiring portion and being sealed with resin, wherein
   the stator molded portion seals at least the busbar module and the wiring portion.
[5] The stator according to any one of [1] to [4], wherein
   at least one of the coils includes a bent portion (27) formed by bending the wiring portion, and
   the first tubular body is disposed so as not to extend across the bent portion.
[6] The stator according to any one of [1] to [4], wherein
   at least one of the coils includes a bent portion (27) formed by bending in the wiring portion, and
   the first tubular body is disposed so as to extend across at least a part of the bent portion.

## Claims

1. A stator comprising:
a stator core (6) rotatably accommodating a rotor (4);
coils (2) arranged in a circumferential direction of the stator core (6); and
a stator molded portion (7) sealing at least a part of the coils (2) with resin, wherein
at least one of the coils includes:
a wiring portion (19) drawn out from the stator core, routed in the circumferential direction of the stator core, and connected to an external terminal (5); and
an insulating tubular body (23) provided at the wiring portion (19) and accommodating a core wire (17) in the tubular body (23),
the stator molded portion seals at least the wiring portion,
the tubular body includes:
a first tubular body (24) having one end exposed from the stator molded portion and another end embedded in the stator molded portion; and
a second tubular body (25) disposed within the stator molded portion and spaced apart from the first tubular body (24).

2. The stator according to claim 1, wherein
the tubular body is a heat-shrinkable tube.

3. The stator according to claim 2, wherein
the core wire has an insulating coating (18) baked on a surface of the core wire,
the heat-shrinkable tube is made of a fluoropolymer, and
the stator molded portion is made of an epoxy resin.

4. The stator according to claim 1, further comprising:
a busbar module (10) including a busbar main body (14) of a busbar (11) connected to the coils, the busbar main body being disposed between coil ends of the coils and the wiring portion and being sealed with resin, wherein
the stator molded portion seals at least the busbar module and the wiring portion.

5. The stator according to claim 1, wherein
at least one of the coils includes a bent portion (27) formed by bending the wiring portion, and
the first tubular body is disposed so as not to extend across the bent portion.

6. The stator according to claim 1, wherein
at least one of the coils includes a bent portion (27) formed by bending in the wiring portion, and
the first tubular body is disposed so as to extend across at least a part of the bent portion.

7. A motor (1) comprising:
a stator (3); and
a rotor (4) rotatably accommodated within the stator (3), wherein
the stator (3) includes:
a stator core (6) rotatably accommodating the rotor (4);
coils (2) arranged in a circumferential direction of the stator core (6); and
a stator molded portion (7) sealing at least a part of the coils (2) with resin,
at least one of the coils (2) includes:
a wiring portion (19) drawn out from the stator core (6), routed in the circumferential direction of the stator core (6), and connected to an external terminal (5); and
an insulating tubular body (23) provided at the wiring portion (19) and accommodating a core wire (17) in the tubular body (23),
the stator molded portion seals at least the wiring portion,
the tubular body includes:
a first tubular body (24) having one end exposed from the stator molded portion and another end embedded in the stator molded portion; and
a second tubular body (25) disposed within the stator molded portion so as to be spaced apart from the first tubular body (24).
